# NEUE EUROPÄISCHE PATENTSCHRIFT

(11) **EP 1 056 783 B2**
(45) Veröffentlichungstag und Bekanntmachung des Hinweises auf die Entscheidung über den Einspruch: **24.06.2015**
(45) Hinweis auf die Patenterteilung: 28.07.2004
(21) Anmeldenummer: 99913147.7
(22) Anmeldetag: 06.02.1999
(51) Int. Cl.: C08F 2/24, D21H 17/37

(54) **FEINTEILIGE POLYMERDISPERSIONEN ZUR PAPIERLEIMUNG**
FINE-PARTICLE POLYMER DISPERSIONS FOR PAPER SIZING
DISPERSIONS POLYMERES A FINES PARTICULES POUR LE COLLAGE DE PAPIER

(30) Priorität: 18.02.1998 DE 19806745
(43) Veröffentlichungstag der Anmeldung: 06.12.2000
(73) Patentinhaber: Kemira Germany GmbH, 51377 Leverkusen (DE)
(72) Erfinder: KÖNIG, Joachim, D-51519 Odenthal (DE); WENZ, Eckhard, D-50679 Köln (DE); SACKMANN, Günter, D-51379 Leverkusen (DE); ROICK, Thomas, D-51375 Leverkusen (DE); THIELE, Bernd, D-51519 Odenthal (DE); KINKEL, Gabriele, D-40789 Monheim (DE); KIJLSTRA, Johan, D-51375 Leverkusen (DE); HAUSCHEL, Bernd, 51373 Leverkusen (DE)
(74) Vertreter: Bublak, Wolfgang
(86) Internationale Anmeldenummer: PCT/EP1999/000804
(87) Internationale Veröffentlichungsnummer: WO 1999/042490

(56) Entgegenhaltungen:
- EP-A- 0 276 770
- EP-A1- 0 257 412
- EP-A1- 0 276 770
- EP-A1- 0 536 597
- EP-A1- 0 780 401
- EP-A1- 0 924 222
- EP-A2- 0 307 816
- GB-A- 932 389
- GB-A- 1 466 064
- US-A- 3 095 391
- US-A- 4 835 212
- US-A- 4 855 343
- US-A- 4 908 240
- US-A- 5 358 998
- US-A- 5 576 384
- US-A- 5 672 392
- DE 19756372.4 (Prioritätsdokument von EP 0924222)
- JP S58115196 A (ENGLISCHE ÜBERSETZUNG)
- GEORGE F. ET AL.: 'Encyclopedia of Polymer Science and Technology', Bd. 2, 1977, JOHN WILEY & SONS, INC., CANADA Seiten 665 - 699
- B.N. MISRA ET AL.: 'Grafting onto Cellulose VIII. Graft Copolymerisation of Poly(ethyleneacrylate) onto Cellulose by Use of Redox Initiators. Comparison of Initiator Reactivities', Bd. 22, 1984, BRITISH LIBRARY Seiten 2767 - 2775

## Beschreibung

Gegenstand der Erfindung sind feinteilige, wäßrige Polymerdispersionen auf Basis von Styrol/(Meth)acrylsäureester-Copolymerisaten, Verfahren zu deren Herstellung und deren Verwendung als Leimungsmittel für Papier, Karton und Pappe.

Besonders geeignet sind die erfindungsgemäßen Polymerdispersionen als Leimungsmittel zur Herstellung graphischer Papiere, die für moderne Druckverfahren verwendet werden, da sie sowohl ein gutes Druckbild im Inkjetdruck erzeugen als auch eine gute Toneradhäsion aufweisen, wie sie z.B. für den Einsatz in Laserdruckern oder Kopiergeräten gefordert ist.

Leimungsmittel für Papier auf Basis von Styrol/Acrylester-Dispersionen sind bekannt.

So beschreibt die japanische Anmeldung JP 58/115196 wäßrige Dispersionen auf Basis von Styrol/Acrylester-Copolymerisaten, gepfropft auf wasserlösliche hochmolekulare Polyhydroxyverbindungen u.a. Stärke, als Papierverfestiger mit Leimungseffekt. Diese Pfropfcopolymerisate werden erhalten, indem man Styrol und einen Acrylester wie n-Butylacrylat in Gegenwart einer wäßrigen Lösung von Stärke unter Bildung einer wäßrigen Dispersion polymerisiert. Stärke wird bei dem beschriebenen Verfahren in hochmolekularer Form eingesetzt und vor der Polymerisation nicht weiter abgebaut. Die verwendeten Starter wie Kaliumperoxodisulfat, Ammoniumperoxodisulfat oder 2,2'-Azobis(2-amidinopropan)-dihydrochlorid besitzen zudem eine unbefriedigende Pfropfaktivität, so daß nur grobteilige Dispersionen mit niedriger Pfropfausbeute gewonnen werden, die zwar zur Erhöhung der Festigkeit verwendet werden können, deren Leimungswirkung jedoch unbefriedigend ist. Besonders fällt die Leimungswirkung dieser Produkte ab auf Papieren, die mit Alkyldiketen (AKD) oder Alkenylbernsteinsäureanhydrid (ASA) in der Masse vorgeleimt sind, wie sie üblicherweise zur Herstellung graphischer Papiere verwendet werden, sowie bei sauren Tinten, wie sie z.B. im Hercules Sizing Test zur Prüfung der Leimungswirkung eingesetzt werden.

In den europäischen Patentanmeldungen EP-A 257 412 und EP-A 276 770 sind Pfropfcopolymerisate von Acrylnitril und Acrylsäureestem auf Stärke beansprucht, die ebenfalls in Form feinteiliger wäßriger Dispersionen zur Papierleimung eingesetzt werden.

Bekannt sind weiterhin feinteilige Leimungsmitteldispersionen die durch Emulsionspolymerisation von Monomeren wie z.B. Acrylnitril, Butylacrylat oder Styrol in Gegenwart von Sulfonsäuregruppen enthaltenden polymeren anionischen Emulgatoren erhalten werden (vgl. EP-A 331 066 und EP-A 400 410).

Diese, aus dem Stand der Technik bekannten Dispersionen zeigen besonders auf neutralen und kreidehaltigen Papieren ausgezeichnete anwendungstechnische Eigenschaften. Allerdings sind sie gegenüber zwei- und dreiwertigen Kationen wie z.B. Ca²⁺ oder Al³⁺ von geringer Stabilität. Dies kann unter ungünstigen Praxisbedingungen zu Ausfällungen in der Leimpresse und damit zu einer Beeinträchtigung ihrer Leimungswirkung führen.

Es wurden nun feinteilige Polymerdispersionen von Stärke-Pfropfcopolymerisaten auf Basis von Styrol/(Meth)acrylsäureestern mit verbesserten anwendungstechnischen Eigenschaften gefunden.

Die vorliegende Erfindung betrifft feinteilige wäßrige Dispersionen mit einer Teilchengröße unter 100 nm, erhältlich durch radikalisch initiierte Emulsionscopolymerisation von ethylenisch ungesättigten Monomeren in Gegenwart von Stärke, dadurch gekennzeichnet, daß man
als ethylenisch ungesättigte Monomere
(a) 30 bis 60 Gew.-% mindestens eines gegebenenfalls substituierten Styrols,
(b) 60 bis 30 Gew.-% mindestens eines (Meth)acrylsäure-C₁-C₄-alkylesters,
(c) 0 bis 10 Gew.-% an anderen ethylenisch ungesättigten copolymerisierbaren Monomeren,
als Stärke (d) 10 bis 40 Gew.-% abgebaute Stärke mit einem mittleren Molgewicht Mₙ = 500 bis 10 000, wobei die Summe (a) + (b) + (c) + (d) 100 % beträgt, und sich auf den Gesamtfeststoffgehalt der Dispersion bezieht,
und als Radikalstarter für die radikalisch initiierte Emulsionspolymerisation ein pfropfaktives, wasserlösliches Redoxsystem gemäß Patentanspruch 1 einsetzt und die Polymerisation emulgatorfrei durchgeführt.

Bevorzugt sind die erfindungsgemäßen wäßrigen Polymerdispersionen, die dadurch gekennzeichnet sind, daß sie einen Feststoffgehalt von 10 bis 40 % aufweisen.

Als Monomere der Gruppe (a) geeignet sind Styrol sowie substituierte Styrole wie α-Methylstyrol oder Vinyltoluol oder Mischungen daraus.

Als Monomere der Gruppe (b) kommen Acrylsäure-C₁-C₄-alkylester, Methacrylsäure-C₁-C₄-alkylester oder deren Gemische in Frage, wie z.B. n-Butyl-, iso-Butyl-, tert-Butyl- oder 2-Butylacrylat sowie die entsprechenden Butylmethacrylate, weiterhin Methylacrylat, Methylmethacrylat, Ethylacrylat, Ethylmethacrylat, Propylacrylat oder Propylmethacrylat. Bevorzugt ist eine Mischung aus mindestens zwei isomeren Butylacrylaten, wobei das Mischungsverhältnis 10:90 bis 90:10 betragen kann. Besonders bevorzugt sind Mischungen aus n-Butylacrylat und tert.-Butylacrylat sowie Mischungen aus n-Butylacrylat und Methylmethacrylat.

Als Monomere der Gruppe (c) kommen weitere ethylenisch ungesättigte Monomere in Frage wie Ethylhexylacrylat, Stearylacrylat, Stearylmethacrylat sowie weitere Ester der Acryl- und Methacrylsäure mit Alkoholen, die mehr als vier C-Atome aufweisen, weiterhin Acrylnitril, Methacrylnitril, Acrylamid, Vinylacetat oder auch anionische Comonomere wie Acrylsäure, Methacrylsäure, Styrolsulfonsäure. Besonders bevorzugt als Monomere der Gruppe (c) sind Acrylsäure und Styrolsulfonsäure.

Die Gew.-% an Komponenten (a) bis (d) beziehen sich auf den Gesamtfeststoffgehalt der Dispersion, d.h. die Summe der Gewichtsanteile der Komponenten (a) bis (d).

Als Stärke kommen native Stärken wie Kartoffel-, Weizen-, Mais, Reis- oder Tapiokastärke in Betracht, wobei Kartoffelstärke bevorzugt ist. Bevorzugt werden Stärketypen mit einem hohen Gehalt an Amylopektin von 80 % und höher eingesetzt. Besonders bevorzugt ist Kartoffelstärke mit einem Amylopektingehalt >95 %.

Ebenso können chemisch modifizierte Stärken wie Hydroxyethyl- oder Hydroxypropylstärken eingesetzt werden oder auch Stärken, die anionische Gruppen enthalten wie z.B. Phosphatstärke, oder auch kationisierte Stärken, die quartemäre Ammoniumgruppen enthalten, wobei ein Substitutionsgrad DS = 0,01-0,2 bevorzugt ist. Der Substitutionsgrad DS gibt dabei die Zahl der kationischen Gruppen an, die durchschnittlich pro Glucoseeinheit in der Stärke enthalten sind. Besonders bevorzugt sind amphotere Stärken, die sowohl quatärnäre Ammoniumgruppen als auch anionische Gruppen wie Carboxylat und/oder Phosphatgruppen enthalten und die gegebenenfalls auch chemisch modifiziert sein können, z.B. hydroxyalkyliert oder alkylverestert.

Die erfindungsgemäß einzusetzende Stärke (d) wird erhalten, indem man die genannten Stärketypen einem oxidativen, thermischen, sauren oder enzymatischen Abbau unterwirft. Bevorzugt ist ein oxidativer Abbau der Stärke. Zum Abbau geeignet sind Oxidationsmittel wie Hypochlorit, Peroxodisulfat oder Wasserstoffperoxid oder auch Kombinationen davon, die bevorzugt nacheinander eingesetzt werden, um das gewünschte Molgewicht der Stärke einzustellen. Besonders bevorzugt ist ein Stärkeabbau mit Hypochlorit, wie er üblicherweise zur Verbesserung der Löseeigenschaften der Stärke durchgeführt wird, und ein weiterer Abbau z.B. mit Wasserstoffperoxid, der z.B. kurz vor der nachfolgenden Pfropfcopolymerisation durchgeführt werden kann. In diesem Fall wird Wasserstoffperoxid (ber.als 100 %) in Konzentrationen von 0,3 bis 5,0 Gew.-% bezogen auf eingesetzte Stärke verwendet. Die Menge an Wasserstoffperoxid richtet sich danach, bis zu welchem Molgewicht die Stärke abgebaut werden soll.

Die so abgebauten Stärken (d) weisen ein mittleres Molgewicht Mₙ von 500 bis 10000 auf, wodurch einerseits eine gute Dispergierung der Emulsionspolymerisate gewährleistet und andererseits eine vorzeitige Vernetzung und Ausfällung des Polymerisationsansatzes vermieden wird. Das mittlere Molgewicht der abgebauten Stärke kann nach bekannten Methoden leicht über gelchromatographische Analysenverfahren nach Kalibrierung z.B. mit Dextranstandards ermittelt werden. Zur Charakterisierung geeignet sind auch viskosimetrische Verfahren, wie sie z.B. beschrieben sind in "Methods in Carbohydrate Chemistry"; Volume IV, Academic Press New York and Frankfurt, 1964, S.127". Die so ermittelte Intrinsic Viskosität beträgt bevorzugt 0,05 bis 0,12 dl/g.

Die Polymerisation wird in der Regel so durchgeführt, daß zu der wäßrigen Lösung der abgebauten Stärke sowohl die Monomeren, entweder einzeln oder als Mischung, zugesetzt werden als auch der zur Initiierung der Polymerisation geeignete Radikalstarter.

Die Polymerisation wird emulgatorfrei durchgeführt.

Die Polymerisation wird üblicherweise unter Ausschluß von Sauerstoff durchgeführt, bevorzugt in einer Inertgasatmosphäre z.B. unter Stickstoff. Während der Polymerisation ist auf gute Durchmischung mit Hilfe eines geeigneten Rührers zu achten.

Die Polymerisation kann sowohl im Zulaufverfahren als auch nach einem batch-Verfahren bei Temperaturen zwischen 30 und 100°C, bevorzugt zwischen 70 und 95°C durchgeführt werden. Temperaturen über 100°C sind möglich, wenn man in einem Druckreaktor unter Überdruck arbeitet. Möglich ist auch eine kontinuierliche Polymerisation in einer Rührkessel-Kaskade oder einem Strömungsrohr.

Im Zulaufverfahren, das zur Gewinnung einer feinteiligen Dispersion bevorzugt ist, werden die Monomeren sowie der Radikalstarter in einem Rührwerkskessel gleichmäßig der Stärkelösung zudosiert. Um besondere Effekte zu erzielen, kann auch eine ungleichmäßige oder gestaffelte Zugabe einzelner Komponenten erfolgen. Die Reaktionszeiten liegen zwischen 0,5 und 10 Stunden, bevorzugt zwischen 0,75 und 4 Stunden.

Als pfropfaktives, wasserlösliches Redoxsystem wird eine Kombination aus Wasserstoffperoxid und mindestens einem Schwermetallsalz aus der Reihe der Cer-, Mangan- und Eisen(II)salze eingesetzt. Als wasserlösliche Startersysteme mit hoher Pfropfaktivität werden Redoxsysteme aus Wasserstoffperoxid und Schwermetallionen wie Cer-, Mangan- oder Eisen(II)salze vervendet, wie sie z.B. in Houben-Weyl "Methoden der organischen Chemie 4.Auflage, Band E20, S. 2168" beschrieben sind. Besonders geeignet ist das Redoxsystem aus Wasserstoffperoxid und einem Eisen(II)-salz wie Eisen(II)sulfat, das feinteilige Dispersionen mit hoher Pfropfausbeute liefert. Als Pfropfausbeute wird der Anteil des Polymeren verstanden, der nach Abschluß der Polymerisation chemisch an die Stärke gekoppelt ist. Die Pfropfausbeute sollte zur Erzielung feinteiliger und gut wirksamer Dispersionen möglichst hoch sein.

Die Polymerisation wird üblicherweise so gefahren, daß das Schwermetallsalz des Redoxsystems wie z.B. das Eisen(II)salz dem Ansatz bereits vor der Polymerisation zugesetzt wird, während Wasserstoffperoxid gleichzeitig mit den Monomeren, aber getrennt zudosiert wird. Eisen(II)salz wird üblicherweise in Konzentrationen von 10 - 200 mg/l Fe⁺⁺-Ion bezogen auf die gesamte Dispersion eingesetzt, wobei auch höhere und niedrigere Konzentrationen möglich sind. Wasserstoffperoxid (ber. als 100 %) wird in Konzentrationen von 0,2 bis 2,0 Gew.-% bezogen auf Monomer zugesetzt. Diese Menge ist zusätzlich zu der Menge an Wasserstoffperoxid zu rechnen, die zum Stärkeabbau verwendet wird.

Zusätzlich können die oben genannten konventionellen Starter mit verwendet werden. Vorteile bietet besonders die Zugabe weiterer Reduktionsmittel, die bevorzugt mit dem Eisensalz vor der Polymerisation vorgelegt werden. Als Reduktionsmittel kommen z.B. Natriumsulfit, Natriumdisulfit, Natriumhydrogensulfit, Natriumdithionit, Ascorbinsäure sowie das Natriumsalz der Hydroxymethansulfinsäure in Frage.

Das Molgewicht des aufgepfropften Polymeren kann zusätzlich eingestellt werden durch die Mitverwendung von Kettenüberträgern oder Reglern wie z.B. n-Dodecylmercaptan, t-Dodecylmercaptan, n-Butylmercaptan, und t-Butylmercaptan.

Polymerisationen mit dem Redoxsystem aus Wasserstoffperoxid und Schwermetallionen ergeben feinteilige Dispersionen mit guter Leimungswirkung. Die Polymerisation kommt jedoch bei Umsätzen von z.B. 95 bis 98 % bez. auf eingesetztes Monomer meist zum Erliegen, so daß relativ hohe Restmonomergehalte verbleiben, die eine aufwendige Entmonomerisierung z.B. durch Destillation und Entgasung im Vakuum erfordern.

Überraschenderweise wurde gefunden, daß die Polymerisation bis zu sehr hohen Umsätzen und bis zu sehr niedrigen Restmonomergehalten weitergeführt werden kann, wenn man anschließend an die Polymerisation mit dem wasserlöslichen Redoxsystem einen öllöslichen, in Wasser schwerlöslichen Radikalstarter zur Nachaktivierung zusetzt und die Polymerisation damit zu Ende führt.

Als öllösliche, in Wasser schwerlösliche Radikalstarter kommen z.B. übliche organische Peroxide wie Dibenzoylperoxid, Di-tert.-Butylperoxid, tert.-Butylhydroperoxid, Cumolhydroperoxid oder Bis-cyclohexylperoxidicarbonat in Frage.

In diesem Fall polymerisiert man zunächst z.B. mit Wasserstoffperoxid und Eisen(II)sulfat mit hoher Pfropfausbeute bis zu einem Umsatz von 95 bis 98 % bez. auf eingesetztes Monomer und gibt anschließend zur Nachaktivierung z.B. ein öllösliches, in Wasser schwerlösliches organisches Peroxid zu, wobei ein Umsatz >99,8 % und ein Restmonomer-gehalt <100 ppm erreicht und auf eine Entmonomerisierung verzichtet werden kann.

In Wasser schwerlöslich soll hier bedeuten, daß weniger als 1 % des organischen Peroxids in Wasser bei Raumtemperatur vollständig löslich sind.

Bei Polymerisationsverfahren ohne Nachaktivierung ist der Restmonomergehalt so hoch, daß eine nachträgliche Entmonomerisierung z.B. durch eine Wasserdampfdestillation oder durch Einleiten eines Gasstromes erforderlich ist, um den Restmonomergehalt unter geforderte Grenzwerte zu halten und eine Geruchsbelästigung in der Anwendung zu vermeiden. Die Pfropfreaktion mit einem wasserlöslichen Redoxsystem wie z.B Wasserstoffperoxid und Eisen(II)sulfat sowie die anschließende Nachaktivierung mit einem in Wasser schwerlöslichen organischen Peroxid wie t-Butylhydroperoxid ist deshalb besonders bevorzugt. Ohne die Qualität der Dispersion negativ zu beeinflussen, können so Restmonomergehalte <100 mg/kg erhalten werden, so daß auf eine aufwendige Entmonomerisierung verzichtet werden kann.

Die Polymerisation wird bei pH-Werten von 2,5 bis 9, vorzugsweise im schwach sauren Bereich bei pH-Werten von 3 bis 5,5 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak, Ammoniumcarbonat usw. auf den gewünschten Wert eingestellt werden. Bevorzugt ist eine Einstellung des pH-Wertes auf 5 bis 7 anschließend an die Polymerisation mit Natronlauge, Kalilauge oder Ammoniak.

Die Konzentration der erfindungsgemäßen Dispersionen liegt zwischen 10 und 40 Gew.-%, bevorzugt zwischen 18 und 30 Gew.-%. Die Viskosität einer 25 %igen Dispersion liegt zwischen 3 und 30 mPas.

Die erfindungsgemäßen Dispersionen weisen eine sehr niedrige Teilchengröße unter 100 nm, vorzugsweise 50 bis 90 nm auf. Die Teilchengröße kann bestimmt werden z.B. durch Laserkorrelationsspektroskopie oder durch Trübungsmessung. Bei der Trübungsmessung der erfindungsgemäßen Polymerdispersionen weisen diese bei einer Verdünnung auf einem Wirkstoffgehalt von 2,5 % (1:10) eine Extinktion zwischen 0,25 und 1,2 auf, gemessen in einer 1 cm Küvette bei 660 nm.

Bevorzugt ist auch eine erfindungsgemäße wäßrige Polymerdispersion, die dadurch gekennzeichnet ist, daß siein 2,5 %iger wäßriger Lösung eine Extinktion, gemessen in einer 1 cm Küvette bei 660 nm, zwischen 0,25 und 1,2 aufweist.

Zur Erhöhung der Lagerstabilität ist es vorteilhaft, die im Redoxsystem verwendeten Schwermetallionen anschließend an die Polymerisation durch Komplexbildner zu binden, wozu Komplexbildner wie Ethylendiamintetraessigsäure, Nitrilotriessigsäure, Diethylentriaminpentaessigsäure, Polyasparaginsäure, Iminodibernsteinsäure, Citronensäure bzw. ihre Salze geeignet sind. Die Einsatzmenge der Komplexbildner richtet sich dabei nach der Menge an eingesetztem Schwermetallsalz. Üblicherweise werden die Komplexbildner in Konzentrationen von 1 bis 10 mol, bevorzugt in Konzentrationen von 1,1 bis 5 mol pro mol Schwermetallion eingesetzt.

Bei den erfindungsgemäßen Polymerdispersionen handelt es sich um Oberflächenleimungsmitteln mit schwach anionischem, amphoterem oder kationischem Ladungscharakter und geringer Neigung zur Schaumbildung, die ein breites Anwendungsspektrum besitzen. Sie sind geeignet zur Oberflächenleimung aller in der Praxis hergestellten Papierqualitäten, z.B. von alaunhaltigen, alaunfreien, mit Kaolin oder Kreide gefüllten sowie Holzschliff oder Altpapier enthaltende Rohpapiere, die sowohl sauer als auch neutral oder alkalisch hergestellt sein können und die ungeleimt oder auch in der Papiermasse z.B. mit Alkylketendimer oder Alkenylbernsteinsäureanhydrid vorgeleimt sein können. Insbesondere diejenigen erfindungsgemäßen Polymerdispersionen, die als Monomerkomponenten eine Mischung aus mindestens zwei isomeren (Meth)acrylsäure(C₁-C₄)estern enthalten zeichnen sich durch eine hervorragende Leimungswirkung auf in der Masse vorgeleimten Papieren sowie einen deutlich verbesserten Leimungseffekt gegenüber sauren Tinten aus.

Die Erfindung betrifft weiterhin ein Verfahren zur Herstellung der erfindungsgemäßen wäßrigen Polymerdispersion, das dadurch gekennzeichnet ist, daß
(a) 30 bis 60 Gew.-% mindestens eines gegebenenfalls substituierten Styrols,
(b) 60 bis 30 Gew.-% mindestens eines (Meth)acrylsäure-C₁-C₄-alkylesters,
(c) 0 bis 10 Gew.-% an anderen ethylenisch ungesättigten copolymerisierbaren Monomeren und
(d) 10 bis 40 Gew.-% abgebaute Stärke mit einem mittleren Molgewicht Mₙ von 500 bis 10 000
in Gegenwart eines pfropfaktiven, wasserlöslichen Redoxsystems gemäß Patentanspruch 1 polymerisiert werden, wobei die Summe von (a) + (b) + (c) + (d) 100 % beträgt und sich auf den Gesamtfeststoffgehalt bezieht, wobei die Polymerisation emulgatorfrei durchgeführt wird.

Eine bevorzugte Ausführungsfrom des erfindungsgemäßen Verfahren ist dadurch gekennzeichnet, daß nach Beendigung der Polymerisation eine Nachaktivierung mittels eines öllöslichen, in Wasser schwerlöslichen organischen Peroxids erfolgt.

Ebenfalls bevorzugt ist es, daß man im Anschluß an die Nachaktivierung einen Komplexbildner für Eisen in Konzentrationen von 1 bis 5 mol pro mol Eisensalz zusetzt.

Die erfindungsgemäßen Dispersionen können mit allen bei der Oberflächenleimung gebräuchlichen Verfahrensmethoden verarbeitet und in der Leimpressenflotte auf die Oberfläche von Papier aufgetragen werden. Üblich ist der Einsatz in wäßriger Lösung zusammen mit 5 bis 20 Gew.-% Stärke sowie gegebenenfalls Pigmenten und optischem Aufheller in der Leimpresse oder in modernen Auftragsaggregaten wie Filmpresse, Speedsizer oder Gate-roll. Die Menge an Leimungsmittel in der Flotte richtet sich nach dem gewünschten Leimungsgrad der auszurüstenden Papiere. Üblicherweise liegt die Konzentration der erfindungsgemäßen Dispersionen in der Flotte zwischen 0,1 und 2,0 Gew.-% Festsubstanz, bevorzugt zwischen 0,2 und 1,0 Gew.-%. Die auf das Papier aufgebrachte Menge wird durch die Naßaufnahme der gegebenenfalls vorgeleimten Papiere bestimmt. Als Naßaufnahme ist die Menge an Leimpressenflotte zu verstehen, die bezogen auf den trockenen Faserstoff, von diesem aufgenommen werden kann und die u.a. durch die Vorleimung in der Papiermasse beeinflußt werden kann. In Abhängigkeit von der Naßaufnahme liegt die Menge des vom Papier aufgenommenen Leimungsmittels bei 0,03 bis 1,2 Gew.-% Festsubstanz bez. auf trockenen Faserstoff, bevorzugt zwischen 0,1 und 0,8 Gew.-%.

Zusätzlich können die Leimpressenflotten feinteilige Pigmente zur Verbesserung der Bedruckbarkeit enthalten wie z.B. Kreide, gefälltes Calciumcarbonat, Kaolin, Titandioxid, Bariumsulfat oder Gips. Üblich beim Einsatz auf graphischen Papieren ist weiterhin der Zusatz von optischen Aufhellern zur Erhöhung des Weißgrades, gegebenenfalls unter Zusatz von Carriern wie z.B. Polyethylenglykol, Polyvinylalkohol oder Polyvinylpyrrolidon. Besonders vorteilhaft ist die gute Verträglichkeit der erfindungsgemäßen Dispersionen mit optischen Aufhellern, so daß Papiere mit hohem Weißgrad erhalten werden können. Überraschenderweise können auch Dispersionen mit amphoterem und kationischem Ladungscharakter zusammen mit optischen Aufhellern eingesetzt werden, ohne daß im Gegensatz zu üblichen kationischen Leimungsmitteln Ausfällungen auftreten bzw. ein Abfall des Weißgrades beobachtet wird.

Ebenso besonders vorteilhaft ist die Unempfindlichkeit der erfindungsgemäßen Dispersionen gegen Zusatz von Elektrolyten wie Na, Ca oder Al-Ionen, die in vielen Fällen z.B. durch Migration aus dem zu verarbeitenden Rohpapier in der Leimpressenflotte enthalten sein können oder auch gezielt zur Erhöhung der Leitfähigkeit zugesetzt werden.

Die Erfindung betrifft weiterhin die Verwendung der erfindungsgemäßen wäßrigen Polymerdispersion als Oberflächenleimungsmittel für Papier, Pappe und Karton.

Besonders geeignet sind die erfindungsgemäßen Leimungsmitteldispersionen zur Herstellung graphischer Papiere, die für alle üblichen modernen Druckverfahren verwendet werden. Beim Inkjetdruck sind z.B. eine hohe Tintenadsorptionsfähigkeit und eine schnelle Trocknung ohne Durchschlagen gefordert mit gleichzeitig gutem Ink hold-out, Erhalt einer hohen Farbdichte und einer hohen Auflösung sowie einer guten Wisch- und Wasserfestigkeit. Im Farbdruck ist eine hohe Kantenschärfe gefordert, wobei die einzelnen Farbtinten nicht ineinander verlaufen dürfen und eine hohe Farbstärke, Brillanz und Lichtechtheit aufweisen sollen. Diese Anforderungen können durch die erfindungsgemäßen Dispersionen in hervorragender Weise erfüllt werden. Dispersionen mit amphoterem oder kationischem Ladungscharakter zeigen besondere Vorteile in der Wasserechtheit des Inkjetdrucks durch eine bessere Fixierung des Inkjetfarbstoffes.

Für den Einsatz der mit den erfindungsgemäßen Dispersionen ausgerüsteten Papieren bei elektrophotographischen Druckverfahren wie in Laserdruckern und Kopiergeräten ist gleichzeitig eine gute Toneradhäsion gefordert, d.h. der Toner muß mit hoher Wischfestigkeit auf dem Papier haften. Auch diese Forderung kann durch den Einsatz der erfindungsgemäßen Dispersionen auf z.B. mit Alkyldiketen vorgeleimten Papieren in hervorragender Weise erfüllt werden.

### Herstellungsbeispiele:

### Beispiel 1

In einem 2 l-Planschliffkolben mit Rührer, Rückflußkühler und Mantelheizung dispergiert man unter Stickstoff 124,5 g oxidativ abgebaute Kartoffelstärke (Perfectamyl® A 4692 der Fa. Avebe) in 985 g entionisiertem Wasser und löst durch Erwärmen auf 86°C. Nacheinander gibt man 42,7 g (1,54 mMol) einer 1%igen Eisen(II)-sulfat-Lösung sowie 116 g einer 3%igen Wasserstoffperoxid-Lösung zu und rührt 15 min bei 86°C.

Nach 15 Minuten dosiert man gleichzeitig, aber getrennt mit konstanter Dosiergeschwindigkeit innerhalb 90 min bei 86°C die folgenden zwei Dosierlösungen zu:
1) eine Mischung aus 160,6 g Styrol, 80,3 g n-Butylacrylat und 80,3 g tert-Butylacrylat
2) 93,7 g einer 3%igen Wasserstoffperoxid-Lösung.

Nach Beendigung der Dosierung rührt man weitere 15 min bei 86°C nach und gibt dann zur Nachaktivierung 2 g t-Butylhydroperoxid zu. Nach weiteren 60 min bei 86°C kühlt man auf Raumtemperatur ab, gibt 10 g einer 10 %igen Lösung von Ethylendiamintetraessigsäure als Tetranatriumsalz zu und stellt mit 13 g einer 10 %igen Natronlauge einen pH-Wert von 6,5 ein.

Man filtriert über ein 100 µm Filtertuch und erhält eine feinteilige Dispersion mit einem Feststoffgehalt von 25,0 %.

Die feinteilige Dispersion weist einen Restmonomergehalt von 80 mg/kg Styrol, 90 mg/kg n-Butylacrylat sowie 50 mg/kg t-Butylacrylat auf.

Trübungswert einer auf 2,5% verdünnten Dispersion: E = 0,63 (660 nm, 1 cm Küvette)
mittlere Teilchengröße 74,5 nm (bestimmt durch Laserkorrelationsspektroskopie)

### Beispiel 2

In einem 2 l-Dreihalskolben mit Rückflußkühler dispergiert man unter Rühren 67,0 g einer oxidativ abgebauten Kartoffelstärke (Perfectamyl® A 4692) in 536 g entionisiertem Wasser. Man löst die Stärke durch Erhitzen auf 85°C und gibt hintereinander 20,0 g einer 1 %igen wäßrigen Lösung von FeSO₄x7H₂O (0,72 mMol) und 4,0 g 35 %iges Wasserstoffperoxid zu. Nach 15 Minuten ist der Stärkeabbau beendet. Man beginnt nun bei 85°C mit dem getrennten Zulauf der Monomere und des Initiators innerhalb von 90 min.
- Lösung 1:: 86,6 g Styrol, 43,3 g n-Butylacrylat, 43,3 g t-Butylacrylat
- Lösung 2:: 4,3 g Wasserstoffperoxid (35 %ig) und 127 g Wasser

10 min nach Beendigung der Dosierung werden noch 0,7 g t-Butylhydroperoxid zur Nachaktivierung zugesetzt und 60 min nachgerührt.
Danach wird auf Raumtemperatur abgekühlt, durch ein 100µ-Tuch filtriert und mit Natronlauge (20 %ig) auf pH 6 gestellt.
Man erhält eine feinteilige Polymerdispersion mit einem Feststoffgehalt von 24,9 % und einem Trübungswert von E = 0,380 (1:10 verdünnt, 660 nm). Die mittlere Teilchengröße, gemessen durch Laserkorrelationsspektroskopie, beträgt 62 nm.

### Beispiel 3

In einem 2 l-Planschliffkolben mit Rührer, Rückflußkühler und Mantelheizung dispergiert man unter Stickstoff 124,5 g oxidativ abgebaute Kartoffelstärke (Perfectamyl® A 4692 der Fa.Avebe) in 1005 g entionisiertem Wasser und löst durch Erwärmen auf 86°C. Nacheinander gibt man 42,7 g (1,54 mMol) einer 1%igen Eisen(II)sulfat-Lösung sowie 116 g einer 3%igen Wasserstoffperoxid-Lösung zu und rührt 15 min bei 86°C.

Nach 15 Minuten ist der Stärkeabbau beendet. Man dosiert gleichzeitig, aber getrennt mit konstanter Dosiergeschwindigkeit innerhalb 90 min bei 86°C die folgenden zwei Dosierlösungen zu:
- 1): eine Mischung aus 167 g Styrol, 68,5 g n-Butylacrylat und 68,5 g tert-Butylacrylat sowie 17,1 g Acrylsäure
- 2): 93,7 g einer 3%igen Wasserstoffperoxid-Lösung.

Nach Beendigung der Dosierung rührt man weitere 15 min bei 86°C nach und gibt dann zur Nachaktivierung 1,2 g t-Butylhydroperoxid zu. Nach weiteren 60 min bei 86°C kühlt man auf Raumtemperatur ab und stellt mit Ammoniak einen pH-Wert von 6,5 ein.

Man filtriert über ein 100 µm Filtertuch und erhält eine feinteilige Dispersion mit einem Feststoffgehalt von 24,7 %.

Trübungswert einer auf 2,5% verdünnten Dispersion: E = 0,93, (660 nm, 1 cm Küvette)
mittlere Teilchengröße 78,6 nm (bestimmt durch Laserkorrelationsspektroskopie):

### Beispiel 4

In einem 2 l-Planschliffkolben mit Rührer, Rückflußkühler und Mantelheizung dispergiert man unter Stickstoff 124,5 g oxidativ abgebaute Kartoffelstärke (Perfectamyl® A 4692 der Fa.Avebe) in 985 g entionisiertem Wasser und löst durch Erwärmen auf 86°C. Nacheinander gibt man 42,7 g (1,54 mMol) einer 1%igen Eisen(II)sulfat-Lösung sowie 116 g einer 3%igen Wasserstoffperoxid-Lösung zu und rührt 15 min bei 86°C.

Nach 15 Minuten dosiert man gleichzeitig, aber getrennt mit konstanter Dosiergeschwindigkeit innerhalb 90 min bei 86°C die folgenden zwei Dosierlösungen zu:
- 1): eine Mischung aus 171,3 g Styrol, 85,6 g n-Butylacrylat und 64,2 g tert-Butylacrylat
- 2): 93,7 g einer 3%igen Wasserstoffperoxid-Lösung.

Nach Beendigung der Dosierung rührt man weitere 15 min bei 86°C nach und gibt dann zur Nachaktivierung 1,2 g t-Butylhydroperoxid zu. Nach weiteren 60 min bei 86°C kühlt man auf Raumtemperatur ab und stellt mit Ammoniak einen pH-Wert von 6,5 ein.

Man filtriert über ein 100 µm Filtertuch und erhält eine feinteilige Dispersion mit einem Feststoffgehalt von 24,9 %.

Trübungswert einer auf 2,5% verdünnten Dispersion: E = 0,69 (660 nm, 1 cm Küvette).
mittlere Teilchengröße 74,7 nm (bestimmt durch Laserkorrelationsspektroskopie)

### Beispiel 5

Beispiel 1 wird wiederholt unter Einsatz nur eines Butylacrylates bei der Pfropfcopolymerisation:

In einem 2 l-Planschliffkolben mit Rührer und Mantelheizung dispergiert man unter Stickstoff 124,5 g oxidativ abgebaute Kartoffelstärke (Perfectamyl® A 4692 der Fa. Avebe) in 985 g entionisiertem Wasser und löst durch Erwärmen auf 86°C.

Nacheinander gibt man 42,7 g (1,54 mMol) einer 1%igen Eisen(II)sulfat-Lösung sowie 116 g einer 3%igen Wasserstoffperoxid-Lösung zu und rührt 15 min bei 86°C.

Nach 15 Minuten dosiert man gleichzeitig und mit konstanter Dosiergeschwindigkeit innerhalb 90 min die folgenden zwei Dosierlösungen zu:
- 1): eine Mischung aus 160,6 g Styrol und 160,6 g n-Butylacrylat
- 2): 93,7 g einer 3%igen Wasserstoffperoxid-Lösung.

Nach Beendigung der Dosierung rührt man weitere 15 min bei 86°C nach und gibt dann zur Nachaktivierung 2 g t-Butylhydroperoxid zu. Nach weiteren 60 min bei 86°C kühlt man auf Raumtemperatur ab, gibt 10 g einer 10 %igen Lösung von Ethylendiamintetraessigsäure als Tetranatriumsalz zu und stellt mit 13 g einer 10 %igen Natronlauge einen pH-Wert von 6,5 ein.

Man filtriert über ein 100 µm Filtertuch und erhält eine feinteilige Dispersion mit einem Feststoffgehalt von 24,9 %.

Trübungswert einer auf 2,5% verdünnten Dispersion: E = 0,57 (660 nm, 1 cm Küvette)
mittlere Teilchengröße 65,8 nm (bestimmt durch LKS)

### Beispiel 6 Nachaktivierung mit H₂O₂

Beispiel 2 wird wiederholt, wobei man jedoch zur Nachaktivierung 0,6 g Wasserstoffperoxid verwendet.

Man erhält eine feinteilige Dispersion mit akzeptablen Leimungswerten (Tabelle 1). Die Dispersion enthält jedoch hohe Restmonomeranteile von 1675 mg/kg Styrol, 960 mg/kg n-Butylacrylat sowie 980 mg/kg t-Butylacrylat.

### Beispiel 7

Beispiel 4 wird wiederholt unter Verwendung von 171,3 g Styrol und 149,8 g n-Butylacrylat.

Man erhält eine feinteilige Dispersion mit einem Feststoffgehalt von 24,8 % und einem Trübungswert E = 0,97 (1:10 verdünnt, 660 nm, 1 cm Küvette).

### Beispiel 8

In einem 2l-Planschliffkolben mit Rührer und Mantelheizung dispergiert man unter Stickstoff 109,5 g oxidativ abgebaute, kationisierte Kartoffelstärke (Amylofax® 15, Fa. Avebe) in 1056,5 g vollentsalztem Wasser und löst die Stärke unter Rühren durch Erwärmen auf 86° C. Nacheinander werden 23,2 g einer 1%igen Eisen(II)sulfatlösung und 105,1 g einer 3%igen Wasserstoffperoxid-Lösung zugegeben, anschließend rührt man für 15 min bei 86° C nach.

Danach dosiert man parallel und mit konstanter Dosiergeschwindigkeit innerhalb von 90 min die folgenden zwei Dosierlösungen zu:
- 1): Monomermischung aus 167,0 g Styrol, 83,5 g n-Butylacrylat und 83,5 g t-Butylacrylat
- 2): 97,4 g einer 3%igen Wasserstoffperoxid-Lösung

Nach Ende der Dosierung wird 15 min bei 86° C nachgerührt und anschließend durch Zugabe von 2 g t-Butylhydroperoxid nachaktiviert. Nach weiteren 60 min Nachrührzeit bei 86° C wird die Dispersion auf Raumtemperatur abgekühlt, mit 9,9 g einer 10%igen Lösung von Ethylendiamintetraacetat (als Tetranatriumsalz) versetzt und mit 16 g einer 10%igen Natronlauge auf pH 6,5 gestellt.

Man filtriert über einen Polyamid-Filter mit Maschenweite 100 µm und erhält eine feinteilige Dispersion mit einem Feststoffgehalt von 24,6%. Die Extinktion einer daraus hergestellten 2,5%igen Lösung beträgt 0,805 (660 nm, 1 cm-Küvette).

### Beispiel 9

In einem 2l-Planschliffkolben mit Rührer und Mantelheizung dispergiert man unter Stickstoff 109,2 g oxidativ abgebaute Kartoffelstärke (Perfectamyl® A 4692, Fa. Avebe) in 1062 g vollentsalztem Wasser und löst die Stärke unter Rühren durch Erwärmen auf 86° C. Nacheinander werden 23,2 g einer 1%igen Eisen(II)sulfatlösung und 71,4 g einer 3%igen Wasserstoffperoxid-Lösung zugegeben, anschließend rührt man für 15 min bei 86°C nach.

Danach dosiert man parallel und mit konstanter Dosiergeschwindigkeit innerhalb von 90 min die folgenden zwei Dosierlösungen zu:
- 1): Monomermischung aus 145,6 g Styrol, 102,8 g n-Butylacrylat und 85,6 g Methylmethacrylat
- 2): 97,4 g einer 3%igen Wasserstoffperoxid-Lösung

Nach Ende der Dosierung wird 15 min bei 86° C nachgerührt und anschließend durch Zugabe von 2 g t-Butylhydroperoxid nachaktiviert. Nach weiteren 60 min Nachrührzeit bei 86° C wird die Dispersion auf Raumtemperatur abgekühlt, mit 10 g einer 10%igen Lösung von Ethylendiamintetraacetat (als Tetranatriumsalz) versetzt und mit 11,3 g einer 10%igen Natronlauge auf pH 6,5 gestellt.

Man filtriert über einen Polyamid-Filter mit Maschenweite 100 µm und erhält eine feinteilige Dispersion mit einem Feststoffgehalt von 25,0 %. Die Extinktion einer daraus hergestellten 2,5%igen Lösung beträgt 0,884 (660 nm, 1 cm-Küvette).

### Beispiel 10

In einem 2l-Planschliffkolben mit Rührer und Mantelheizung dispergiert man unter Stickstoff 100,2 g oxidativ abgebaute, kationisierte Kartoffelstärke (Amylofax® 15, Fa. Avebe) in 926 g vollentsalztem Wasser und löst die Stärke unter Rühren durch Erwärmen auf 86°C. Nacheinander werden 23,2 g einer 1%igen Eisen(II)sulfatlösung und 67,4 g einer 3%igen Wasserstoffperoxid-Lösung zugegeben, anschließend rührt man für 15 min bei 86° C nach.

Danach dosiert man parallel und mit konstanter Dosiergeschwindigkeit innerhalb von 90 min die folgenden zwei Dosierlösungen zu:
- 1): Monomermischung aus 168,75 g Styrol, 78,75 g n-Butylacrylat und 45,0 g Methylmethacrylat
- 2): 85,3 g einer 3%igen Wasserstoffperoxid-Lösung

Nach Ende der Dosierung wird der Reaktionsansatz mit 350 g vollentsalztem Wasser versetzt und danach 15 min bei 70° C nachgerührt. Anschließend wird durch Zugabe von 2 g t-Butylhydroperoxid nachaktiviert. Nach weiteren 60 min Nachrührzeit bei 70° C wird die Dispersion auf Raumtemperatur abgekühlt, mit 10 g einer 10%igen Lösung von Ethylendiamintetraacetat (als Tetranatriumsalz) versetzt und mit 12 g einer 10%igen Natronlauge auf pH 6,5 gestellt.

Man filtriert über einen Polyamid-Filter mit Maschenweite 100 µm und erhält eine feinteilige Dispersion mit einem Feststoffgehalt von 19,8%. Die Extinktion einer daraus hergestellten 2,5%igen Lösung beträgt 0,900 (660 nm, 1 cm-Küvette).

### Anwendungsbeispiele:

Die Oberflächenausrüstung verschiedener Prüfpapiere mit den erfindungsgemäßen Dispersionen erfolgte auf einer Laborleimpresse der Firma Mathis, Zürich, Type HF. Als Leimungsflotte diente eine Lösung aus 5 Gew.-Teilen oxidierter Kartoffelstärke (Perfectamyl® A 4692) sowie 0,8 bis 1,8 Teile der erfindungsgemäßen Dispersionen aus Beispiel 1-10, aufgefüllt mit Wasser auf 100 Teile.

Die Leimungswirkung der erfindungsgemäßen Leimungsmittel wurde auf folgenden Papieren geprüft:
Papier a) mit AKD-vorgeleimtes Streichrohpapier, flächenbezogene Masse 80 g/m², Naßaufnahme 72%.
Papier b) ungeleimtes füllstoffhaltiges Rohpapier, flächenbezogene Masse 80 g/m², Naßaufnahme 80%.
Papier c) ungeleimtes clay- und kreidehaltiges Papier, flächenbezogene Masse 80 g/m², Naßaufnahme 70%.

Die Trocknung der oberflächengeleimten Papiere erfolgte auf einem Trockenzylinder innerhalb einer Minute bei ca 100°C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte nach DIN 53122 bestimmt. Als Cobb-Wert definiert ist die Wasseraufnahme eines Papierblattes innerhalb 60 sec Benetzungszeit, angegeben in g/m². Je niedriger der Cobb-Wert, desto besser ist der Leimungsgrad der ausgerüsteten Papiere.

Bestimmt wurde weiter die Zeit bis zum Tintendurchschlag im Hercules Sizing Test (Prüfmethode nach Tappi T 530 pm-89). Je länger die Zeit bis zum Tintendurchschlag, desto günstiger ist der Leimungsgrad der ausgerüsteten Papiere.

Die Ergebnisse der anwendungstechnischen Prüfungen sind in den Tabellen 1 und 2 zusammengestellt:

### Vergieichsbeispiel 1 (nicht erfindungsgemäß): Peroxodisulfat als Starter

Beispiel 2 wird wiederholt, wobei jedoch Kaliumperoxodisulfat anstelle von Wasserstoffperoxid verwendet wird.

In einem 2 l-Dreihalskolben mit Rückflußkühler dispergiert man 67,0 g einer oxidativ abgebauten Kartoffelstärke (Perfectamyl® A 4692) in 536 g entionisiertem Wasser. Man löst die Stärke durch Erwärmen auf 85 °C und gibt hintereinander 20,0 g einer 1 %igen wäßrigen Lösung von FeSO₄x7H₂O und 4,0 g 35 %iges wäßrige Wasserstoffperoxid zu. Nach 15 Minuten ist der Stärkeabbau beendet. Man beginnt nun bei 85°C mit dem getrennten Zulauf der Monomere und des Initiators innerhalb von 90 min.
- Lösung 1:: 86,6 g Styrol, 43,3 g n-Butylacrylat, 43,3 g t-Butylacrylat
- Lösung 2:: 6,0 g Kaliumperoxodisulfat in 127 g Wasser

10 min nach Beendigung der Dosierung werden noch 0,7 g tert-Butylhydroperoxid zur Nachaktivierung zugesetzt und 60 min nachgerührt.
Danach wird auf Raumtemperatur abgekühlt, durch ein 100µ-Tuch filtriert und mit Natronlauge (20 %ig) auf pH 6 gestellt.
Man erhält eine stabile Polymerdispersion mit einem Feststoffgehalt von 25,7 % und einem Trübungswert bei 2,5 %iger Verdünnung (660 nm, 1 cm Küvette) von E = 1,65 (1:10 verdünnt, 660 nm).

Die Teilchengröße, gemessen durch Laserkorrelationsspektroskopie, beträgt 104 nm.

In Vergleich mit Beispiel 2 weist diese Dispersion eine deutlich gröbere Teilchengröße auf und fällt in der Leimungswirkung ab, wie aus Tabelle 1 ersichtlich ist.

### Vergleichsbeispiel 2 (nicht erfindungsgemäß): t-Butylhydroperoxid als Starter

Vergleichsbeispiel 2 wird wiederholt, wobei man die folgenden Dosierlösungen einsetzt:
- Lösung 1:: 86,6 g Styrol, 43,3 g n-Butylacrylat, 43,3 g t-Butylacrylat
- Lösung 2:: 10,1 g t-Butylhydroperoxid in 127 g Wasser

Man erhält eine stabile Polymerdispersion mit einem Feststoffgehalt von 24,3 % und einem Trübungswert bei 2,5 %iger Verdünnung von E = 2,8 (660 nm, 1 cm Küvette). Die Teilchengröße, gemessen durch Laserkorrelationsspektroskopie, beträgt 112 nm.

Auch diese Dispersion ist wesentlich grobteiliger als Beispiel 2 und fällt in der Leimungswirkung deutlich ab.

### Vergleichsbeispiel 3 (nicht erfindungsgemäß):

Beispiel 1 der japanischen Anmeldung JP 58/115196 wird wie folgt nachgestellt:

In einem 2 l-Planschliffkolben mit Rührer, Rückflußkühler und Mantelheizung dispergiert man unter Stickstoff 48 g oxidativ abgebaute Kartoffelstärke (Perfectamyl® A 4692 der Fa. Avebe) in 1024 g entionisiertem Wasser und löst durch Erwärmen auf 90°C.

Nach 15 min bei 90°C kühlt man auf 30°C ab und gibt nacheinander unter Rühren 148,5 g Styrol sowie 111,4 g n-Butylacrylat zu.

Nach 10 min gibt man eine Lösung von 2,56 g Kaliumperoxodisulfat in 128 g Wasser zu, erwärmt auf 80°C und rührt 3 Stunden bei dieser Temperatur. Anschließend rührt man weitere 3 Stunden bei 90°C und kühlt dann auf Raumtemperatur ab.

Man filtriert über ein 100 µm Filtertuch und erhält eine grobteilige Dispersion mit einem Feststoffgehalt von 20,8 %.

Trübungswert E = 0,60 (1:100 verdünnt, 660 nm). Die mittlere Teilchengröße, gemessen durch Laserkorrelationsspektroskopie, beträgt 148 nm.

Wie Tabelle 1 zeigt, besitzt die Dispersion nur eine unzureichende Leimungswirkung.

**Tabelle 1: Ergebnisse der Leimungsprüfung**

| | | | | | | | | | | | | | | | | | | | | | |
|---|---|---|---|---|---|---|---|---|---|---|---|---|---|---|---|---|---|---|---|---|---|
| Papier 1 | Streichrohpapier, ca. 80 g/m², Absorption 72% | | | | | | | | | | | | | | | | | | | | |
| Papier 2 | ungeleimtes gefülltes Papier, ca. 80 g/m², | | | | | | | | | | | | | | | | | | | | |
| | Absorption 80% | | | | | | | | | | | | | | | | | | | | |
| | | | | | | | | | | | | | | | | | | | | | |

| | | **Beispiel 1** | | **Beispiel 2** | | **Beispiel 3** | | **Beispiel 4** | | **Beispiel 5** | | **Beispiel 6** | | **Beispiel 7** | | **Vergleich 1** | | **Vergleich 2** | | **Vergleich 3** | |
|---|---|---|---|---|---|---|---|---|---|---|---|---|---|---|---|---|---|---|---|---|---|
| Feststoffgehalt | % | 25,0 | | 24,9 | | 24,7 | | 24,9 | | 24,9 | | 24,7 | | **24,8** | | 25,4 | | 24,3 | | 20,8 | |
| Einsatz, fest | % | 0.3 | 0,45 | 0.3 | 0,45 | 0.3 | 0,45 | 0.3 | 0,45 | 0.3 | 0,45 | 0.3 | 0,45 | 0.3 | 0,45 | 0.3 | 0,45 | 0.3 | 0,45 | 0.3 | 0.45 |
| **Hercules Sizing** | | | | | | | | | | | | | | | | | | | | | |
| Papier 1 | scc | 85 | 148 | 140 | 169 | 93 | 176 | 65 | 135 | 52 | 90 | 61 | 115 | 45 | 100 | 51 | 101 | 34 | 75 | 4 | 19 |
| Papier 2 | scc | 40 | 145 | 153 | 248 | 35 | 95 | 35 | 110 | 23 | 75 | 31 | 95 | 10 | 43 | 23 | 84 | 18 | 55 | keine | Leimung |
| **Cobb-Test** | | | | | | | | | | | | | | | | | | | | | |
| Papier 1 | g/m² | 27,3 | 24.6 | 26,0 | 24.7 | 30 | 25.3 | 25,8 | 23,6 | 32 | 26.4 | 32 | 26.8 | 31 | 25,5 | 39 | 26,6 | 63 | 35 | >80 | 70 |
| Papier 2 | g/m² | 33,5 | 22,2 | 22.3 | 20,4 | 35 | 24,3 | 33 | 22,8 | 67 | 26,1 | 38 | 22,6 | >80 | 27.5 | 65 | 25.1 | 74 | 33 | keine | Leitnung |
| Extinction 660 nm | 1:10 verd. | 0.63 | | 0.38 | | 0.93 | | 0.69 | | 0.57 | | 0.715 | | 0,97 | | 1,65 | | 2.8 | | ca 6 | (1:100 verdünnt) |
| Teilchengröße | nm | 74,5 | | 62,0 | | 78,6 | | 74,7 | | 65,8 | | 81 | | 76,5 | | 104 | | 112 | | 148 | |

**Tabelle 2:**

| **Ergebnisse der Leimungsprüfung** | | | | | | | |
|---|---|---|---|---|---|---|---|
| Papier 1 Streichrohpapier, ca. 80 g/m², Absorption 72% Papier 3 ungeleimtes clay- und kreidehaltiges Papier, ca. 80 g/m², Absorption 70% | | | | | | | |

| | | **Beispiel 8** | | **Beispiel 9** | | Beispiel 10 | |
|---|---|---|---|---|---|---|---|
| Feststoffgehalt | % | 24,6 | | 25,0 | | 19,8 | |
| Einsatz, fest | % | 0,2 | 0,3 | 0,2 | 0,3 | 0,2 | 0,3 |

| **Hercules Sizing Test** | | | | | | | |
|---|---|---|---|---|---|---|---|
| Papier 1 | sec | 88 | 157 | 46 | 104 | 71 | 133 |
| Papier 3 | sec | - | - | 139 | 147 | 124 | 152 |

| **Cobb-Test** | | | | | | | |
|---|---|---|---|---|---|---|---|
| Papier 1 | g/m² | 33 | 25,6 | 44 | 25,0 | 31 | 24,3 |
| Papier 3 | g/m² | - | - | 26,0 | 24,9 | 23,4 | 21,6 |
| Extinction 660 nm | auf 2,5% | 0,81 | | 0,88 | | 0,90 | |
| | verdünnt | | | | | | |

**Tabelle 2:**

| **Ergebnisse der Leimungsprüfung** | | | | | | | |
|---|---|---|---|---|---|---|---|
| Papier 1 | Streichrohpapier, ca. 80 | | | | | | |
| | g/m², Absorption 72% | | | | | | |
| Papier 3 | ungeleimtes clay- und kreidehaltiges | | | | | | |
| | Papier, ca. 80 g/m², Absorption 70% | | | | | | |

| | | **Beispiel 8** | | **Beispiel 9** | | Beispiel 10 | |
|---|---|---|---|---|---|---|---|
| Feststoffgehalt | % | 24,6 | | 25,0 | | 19,8 | |
| Einsatz, fest | % | 0,2 | 0,3 | 0,2 | 0,3 | 0,2 | 0,3 |

| **Hercules Sizing Test** | | | | | | | |
|---|---|---|---|---|---|---|---|
| Papier 1 | sec | 88 | 157 | 46 | 104 | 71 | 133 |
| Papier 3 | sec | - | - | 139 | 147 | 124 | 152 |

| **Cobb-Test** | | | | | | | |
|---|---|---|---|---|---|---|---|
| Papier 1 | g/m² | 33 | 25,6 | 44 | 25,0 | 31 | 24,3 |
| Papier 3 | g/m² | - | - | 26,0 | 24,9 | 23,4 | 21,6 |
| Extinction 660 nm | auf 2,5% | 0,81 | | 0,88 | | 0,90 | |
| | verdünnt | | | | | | |

## Patentansprüche

1. Wäßrige feinteilige Polymerdispersion mit einer Teilchengröße unter 100 nm, erhältlich durch radikalisch initiierte Emulsionscopolymerisation von ethylenisch ungesättigten Monomeren in Gegenwart von Stärke, **dadurch gekennzeichnet, daß** man
als ethylenisch ungesättigte Monomere
(a) 30 bis 60 Gew.-% mindestens eines gegebenenfalls substituierten Styrols,
(b) 60 bis 30 Gew.-% mindestens eines (Meth)acrylsäure-C₁-C₄-alkylesters,
(c) 0 bis 10 Gew.-% an anderen ethylenisch ungesättigten copolymerisierbaren Monomeren,
als Stärke (d) 10 bis 40 Gew.-% abgebaute Stärke mit einem mittleren Molgewicht Mₙ = 500 bis 10000, wobei die Summe (a) + (b) + (c) + (d) 100 % beträgt und sich auf den Gesamtfeststoffgehalt der Dispersion bezieht, als Radikalstarter für die radikalisch initiierte Emulsionspolymerisation ein pfropfaktives, wasserlösliches Redoxsystem einsetzt, und die Polymerisation emulgatorfrei durchführt, wobei als pfropfaktives, wasserlösliches Redoxsystem eine Kombination aus Wasserstoffperoxid und mindestens einem Schwermetallsalz aus der Reihe der Cer-, Mangan- und Eisen(II)salze eingetzt wird.

2. Wäßrige Polymerdispersion gemäß Anspruch 1, **dadurch gekennzeichnet, daß** als Monomere (b) eine Mischung aus mindestens zwei isomeren Butylacrylaten eingesetzt wird.

3. Wäßrige Polymerdispersion gemäß Anspruch 1 und 2, **dadurch gekennzeichnet, daß** als Monomere (b) eine Mischung aus n-Butylacrylat und tert.-Butyl-acrylat eingesetzt wird.

4. Wäßrige Polymerdispersion gemäß Anspruch 1, **dadurch gekennzeichnet, daß** als Monomere (b) eine Mischung aus n-Butylacrylat und Methylmethacrylat eingesetzt wird.

5. Wäßrige Polymerdispersion gemäß Anspruch 1, **dadurch gekennzeichnet, daß** als Stärke (d) eine kationische Stärke mit einem Substitutionsgrad DS = 0,01-0,2 eingesetzt wird.

6. Wäßrige Polymerdispersion gemäß Anspruch 1, **dadurch gekennzeichnet, daß** sie einen Feststoffgehalt von 10 bis 40 % aufweist.

7. Wäßrige Polymerdispersion gemäß Aspruch 1, **dadurch gekennzeichnet, daß** sie in 2,5 %iger wäßriger Lösung eine Extinktion, gemessen in einer 1 cm Küvette bei 660 nm, zwischen 0,25 und 1,2 aüfweist.

8. Verfahren zur Herstellung einer wäßrigen feinteiligen Polymerdispersion mit einer Teilchengröße unter 100 nm gemäß Anspruch 1, **dadurch gekennzeichnet, daß**
(a) 30 bis 60 Gew.-% mindestens eines gegebenenfalls substituierten Styrols,
(b) 60 bis 30 Gew.-% mindestens eines (Meth)acrylsäure-C₁-C₄-alkyl-esters,
(c) 0 bis 10 Gew.-% an anderen ethylenisch ungesättigten copolymerisierbaren Monomeren und
(d) 10 bis 40 Gew.-% abgebaute Stärke mit einem mittleren Molgewicht Mₙ von 500 bis 10 000
in Gegenwart eines pfropfaktiven, wasserlöslichen Redoxsystems polymerisiert werden, wobei die Summe von (a) + (b) + (c) + (d) 100 % beträgt und sich auf den Gesamtfeststoffgehalt der Dispersion bezieht, wobei die Polymerisation emulgatorfrei durchgeführt wird und als pfropfaktives, wasserlösliches Redoxsystem eine Kombination aus Wasserstoffperoxid und mindestens einem Schwermetallsalz aus der Reihe der Cer-, Mangan- und Eisen(II)salze eingetzt wird.

9. Verfahren gemäß Anspruch 8, **dadurch gekennzeichnet, daß** nach Beendigung der Polymerisation eine Nachaktivierung mittels eines öllöslichen, in Wasser schwerlöslichen organischen Peroxids erfolgt.

10. Verfahren gemäß Anspruch 8, **dadurch gekennzeichnet, daß** man im Anschluß an die Nachaktivierung einen Komplexbildner für Eisen in Konzentrationen von 1 bis 5 mol pro mol Eisensalz zusetzt.

11. Verwendung einer wäßrigen Polymerdispersion gemäß Anspruch 1 als Oberflächenleimungsmittel für Papier, Pappe und Karton.

## Claims

1. Aqueous fine-particled polymer dispersion having a particle size of less than 100 nm obtainable by free radical emulsion copolymerization of ethylenically unsaturated monomers in the presence of starch, **characterized in that**
(a) 30 to 60% by weight of at least one optionally substituted styrene,
(b) 60 to 30% by weight of at least one C₁-C₄-alkyl (meth)acrylate,
(c) 0 to 10% by weight of other ethylenically unsaturated copolymerizable monomers are used as ethylenically unsaturated monomers,
(d) 10 to 40% by weight of degraded starch having an average molecular weight Mₙ = 500 to 10,000 are used as starch, the sum (a) + (b) + (c)+ (d) being 100%, and relating to the total solids content of the dispersion,
a graft-linking, water-soluble redox system is used as free radical initiator for the free radical emulsion polymerization, and the polymerization is carried out in the absence of emulsifiers, wherein a combination of hydrogen peroxide and at least one heavy metal salt from the series of the cerium, manganese and iron(II) salts is used as the graft-linking, water-soluble redox system.

2. Aqueous polymer dispersion according to Claim 1, **characterized in that** a mixture of at least two isomeric butyl acrylates is used as monomers (b).

3. Aqueous polymer dispersion according to Claim 1 and 2, **characterized in that** a mixture of n-butyl acrylate and tert-butyl acrylate is used a monomers (b).

4. Aqueous polymer dispersion according to Claim 1, **characterized in that** a mixture of n-butyl acrylate and methyl methacrylate is used as monomers (b).

5. Aqueous polymer dispersion according to Claim 1, **characterized in that** a cationic starch having a degree of substitution DS = 0.01-0.2 is used as starch (d).

6. Aqueous polymer dispersion according to Claim 1, **characterized in that** it has a solids content of 10 to 40%.

7. Aqueous polymer dispersion according to Claim 1, **characterized in that** it has, in 2.5% strength aqueous solution, an absorbance, measured in a 1 cm cell at 660 nm, of between 0.25 and 1.2.

8. Process for the preparation of an aqueous fine-particled polymer dispersion having a particle size of less than 100 nm according to Claim 1, **characterized in that**
(a) 30 to 60% by weight of at least one optionally substituted styrene,
(b) 60 to 30% by weight of at least one C₁-C₄-alkyl (meth)acrylate,
(c) 0 to 10% by weight of other ethylenically unsaturated copolymerizable monomers and
(d) 10 to 40% by weight of degraded starch having an average molecular weight Mₙ of 500 to 10,000
are polymerized in the presence of a graft-linking, water-soluble redox system, the sum of (a) + (b) + (c)+ (d) being 100%, and relating to the total solids content of the dispersion, wherein the polymerization is carried out in the absence of emulsifiers, and a combination of hydrogen peroxide and at least one heavy metal salt from the series of the cerium, manganese and iron(II) salts is used as the graft-linking, water-soluble redox system.

9. Process according to Claim 8, **characterized in that** subsequent activation is effected by means of an oil-soluble, sparingly water-soluble organic peroxide after the end of the polymerization.

10. Process according to Claim 8, **characterized in that** a complexing agent for iron is added in concentrations of 1 to 5 mol per mol of iron salt after the subsequent activation step.

11. Use of an aqueous polymer dispersion according to Claim 1 as a surface size for paper, board and cardboard.

## Revendications

1. Dispersion aqueuse de polymère en fines particules, à une dimension de particule inférieure à 100 nm, obtenue par copolymérisation radicalaire en émulsion de monomères à insaturation éthylénique en présence d'amidon, **caractérisée en ce que** l'on a utilisé
en tant que monomères à insaturation éthylénique
(a) 30 à 60 % en poids d'au moins un styrène éventuellement substitué,
(b) 60 à 30 % en poids d'au moins un (méth)acrylate d'alkyle en C₁-C₄,
(c) 0 à 10% en poids d'autres monomères à insaturation éthylénique copolymérisables,
en tant qu'amidon (d) 10 à 40 % en poids d'amidon dégradé à un poids moléculaire moyen M_{n =} 500 à 10 000, la somme (a) + (b) + (c) + (d) représentant 100 %, rapportés aux matières solides totales de la dispersion,
en tant qu'inducteur radicalaire pour la polymérisation radicalaire en émulsion, un système rédox soluble dans l'eau et actif au greffage,
et **en ce que** l'on effectue la polymérisation sans émulsifiant,
en utilisant en tant que système rédox soluble dans l'eau et actif au greffage une combinaison de peroxyde d'hydrogène et d'au moins un sel de métal lourd choisi parmi les sels de cérium, de manganèse et de fer-II.

2. Dispersion aqueuse de polymère selon la revendication 1, **caractérisée en ce que** l'on a utilisé en tant que monomères (b) un mélange d'au moins deux acrylates de butyle isomères.

3. Dispersion aqueuse de polymère selon la revendication 1 et 2, **caractérisée en ce que** l'on a utilisé en tant que monomères (b) un mélange d'acrylate de n-butyle et d'acrylate de tert-butyle.

4. Dispersion aqueuse de polymère selon la revendication 1, **caractérisée en ce que** l'on a utilisé en tant que monomères (b) un mélange d'acrylate de n-butyle et de méthacrylate de méthyle.

5. Dispersion aqueuse de polymère selon la revendication 1, **caractérisée en ce que** l'on a utilisé en tant qu'amidon (d) un amidon cationique présentant un degré de substitution DS = 0,01 à 0,2.

6. Dispersion aqueuse de polymère selon la revendication 1, **caractérisée par** une teneur en matières solides de 10 à 40 %.

7. Dispersion aqueuse de polymère selon la revendication 1, **caractérisée en ce qu'**elle présente à l'état de solution aqueuse à 2,5 % une extinction comprise entre 0,25 et 1,2, la mesure étant faite dans une cuvette de 1 cm à la longueur d'onde de 660 nm.

8. Procédé pour la préparation d'une dispersion aqueuse de polymère en fines particules, à une dimension de particule inférieure à 100 nm, selon la revendication 1, **caractérisée en ce que** l'on polymérise
(a) 30 à 60 % en poids d'au moins un styrène éventuellement substitué,
(b) 60 à 30 % en poids d'au moins un (méth)acrylate d'alkyle en C1-C4,
(c) 0 à 10 % en poids d'autres monomères à insaturation éthylénique copolymérisables et
(d) 10 à 40 % en poids d'un amidon dégradé à un poids moléculaire moyen Mₙ de 500 à 10 000 en présence d'un système rédox soluble dans l'eau et actif au greffage, la somme (a) + (b) + (c) + (d) représentant au total 100 % du poids total des matières solides de la dispersion, la polymérisation étant effectuée sous émulsifiant, et en utilisant en tant que système rédox soluble dans l'eau et actif au greffage une combinaison de peroxyde d'hydrogène et d'au moins un sel de métal lourd choisi parmi les sels de cérium, de manganèse et de fer-II.

9. Procédé selon la revendication 8, **caractérisé en ce qu'**après la polymérisation on procède à une réactivation à l'aide d'un peroxyde organique soluble dans l'huile et peu soluble dans l'eau.

10. Procédé selon la revendication 8, **caractérisé en ce qu'**après la réactivation on ajoute un complexant du fer à une concentration de 1 à 5 mol par mole du sel de fer.

11. Utilisation d'une dispersion aqueuse de polymère selon la revendication 1 en tant qu'agent de collage en surface pour les papiers et cartons.
